# EUROPÄISCHE PATENTSCHRIFT

(11) **EP 0 732 352 B1**
(45) Veröffentlichungstag und Bekanntmachung des Hinweises auf die Patenterteilung: **05.12.2001**
(21) Anmeldenummer: 96103014.5
(22) Anmeldetag: 29.02.1996
(51) Int. Cl.: C08G 73/02

(54) **Vernetzen von aminogruppenhaltigen Substanzen in wässriger Lösung**
Cross-linking of amino groups containing substances in aqueous medium
Réticulation de produits contenant des groupes amino en milieu aqueux

(30) Priorität: 13.03.1995 DE 19508945
(43) Veröffentlichungstag der Anmeldung: 18.09.1996
(73) Patentinhaber: WOLFF WALSRODE AG, 29655 Walsrode (DE)
(72) Erfinder: Bayer, Roland, Dr., 29683 Dorfmark (DE); Koch, Wolfgang, Dr., 29699 Bomlitz (DE); Szablikowski, Klaus, Dr., 29664 Walsrode (DE)
(74) Vertreter: Feldhues, Michael L.F., Dr.

(56) Entgegenhaltungen:
- EP-A- 0 579 081
- GB-A- 1 156 516

## Beschreibung

Die vorliegende Erfindung betrifft ein neues Verfahren zur Vernetzung von wasserlöslichen, aminogruppenhaltigen Substanzen. Die Anwendung dieses Verfahrens ermöglicht es, die Vernetzung in kürzerer Zeit und mit geringerem Verbrauch an Vernetzer durchzuführen. Die dabei entstehenden Produkte weisen bei Raumtemperatur und erhöhter Temperatur eine verbesserte Lagerstabilität auf, die nicht mit einem Viskositätsanstieg verknüpft ist.

Die Vernetzung wasserlöslicher Substanzen ist seit langer Zeit bekannt. In der Regel werden hierfür Epihalogenhydrine (insbesondere Epichlorhydrin), Halogenhydroxyalkane oder Dichloralkane, insbesondere Dichlorethan, eingesetzt. Die Vernetzung mit Epichlorhydrin und Dichlorethan wird insbesondere an folgenden Systemen durchgeführt (aus den zahlreichen Patenten und Offenlegungsschriften wurden exemplarisch einige ausgewählt):
1. An hochmolekularen Polyaminen, wie Polyalkylenpolyaminen, Polyallylamin, Polyvinylamin und deren Copolymeren: DE-OS 2 364 443
2. An Polyamidoaminen: DE-PS 3 721 057, EP-PS 0 332 967, GB-PS 1 035 296, EP-OS 0 553 575, DE-PS 1 264 943, DE-OS 1 906 561, DE-OS 2 938 588, DE-OS 1 595 358, DE-OS 1 595 302, DE-OS 1 696 248, DE-OS 2 257 271, DE-OS 2 229 219, DE-PS 3 808 741, EP-PS 0 282 862, DE-OS 3 810 425, DE-OS 4 136 289, DE-OS 2 158 199, EP-PS 0 002 475, GB-PS 1 206 958, DE-PS 1 771 814, US-PS 2 926 154, US-PS 3 332 901, EP-PS 0 131 200, US-PS 3 320 215, EP-PS 0 126 176, EP-PS 0 374 938, DE-OS 1 720 905.
3. An Ammoniak und niedermolekularen Polyaminen: US-PS 3 174 928, US-PS 2 049 467, DE-OS 2 364 583, DE-PS 1 211 922, DE-OS 2 052 023, EP-PS 0 282 862, US-PS 3 953 330, US-PS 3 947 383.
4. An Mischungen von Polyalkylenpolyaminen, Polyalkylenpolyamoniumverbindungen und Polyaminoamiden: DE-PS 2 756 431, DE-PS 2 502 874, EP-PS 0 000 714.
5. An Mischungen von Polyaminoamiden und niedermolekularen Substanzen: DE-PS 2 502 874, DE-PS 2 156 215, DE-PS 1 906 450, DE-OS 3 810 425, US-PS 3 224 990.
6. An Polymerisaten, wie derivatieserten Polyacrylamiden, Vinylimidazol-Homo- und -Copolymeren: DE-OS 1 770 150, EP-OS 0 146 000.
7. An Pfropfprodukten von Ethylenimin auf Polyaminoamiden: DE-OS 1 802 435.

Die vernetzten Polymere finden Anwendung als Papierhilfsmittel, Flockungsmittel zur Wasser- und Abwasserbehandlung, als Antistatikum, z. B. in der Textilverarbeitung, usw. Die Durchführung der Vernetzung geschieht nach Stand der Technik so, dass zu einer aufgeheizten Polymerlösung Epihalogenhydrin gepumpt oder getropft wird. Dabei ist es nicht zweckmäßig, die gesamte zur Vernetzung benötigte Menge Vernetzer in einem einzigen Zulauf zuzudosieren, weil nach Beendigung der Zugabe die Vernetzungsreaktion noch eine zeitlang weiter abläuft (Nachreaktionszeit). Dies ist mit einem Viskositätsanstieg verbunden. Um eine bestimmte Viskosität zu erreichen, sind deshalb i. a. mehrere Zugaben nötig. Nach jeder Zugabe muss die Beendigung der Reaktion bzw. die Beendigung des Viskositätsanstiegs abgewartet werden. Der große Zeitaufwand, der dazu nötig ist, führt zu hohen Fertigungskosten. Ein anderer Nachteil der Vernetzung nach Stand der Technik ist die Lagerstabilität (Viskositätsstabilität) der erhaltenen Produkte. Die in Lösung vernetzten Produkte enthalten i. a. noch so viele reaktive Gruppen, dass sich die Viskosität des Produktes beim Lagern, insbesondere in der Wärme, deutlich erhöhen kann.

Es war Aufgabe der vorliegenden Erfindung, ein effektiveres Vernetzungsverfahren für nieder- und hochmolekulare Amine zu finden. Es wurde nun gefunden, dass sich das Problem der langwierigen Herstellung mit zahlreichen Zugabezyklen und das der mangelnden Lagerstabilität lösen lässt, wenn statt reinem Vernetzer eine stark verdünnte Lösung des Vernetzers (insbesondere Epichlorhydrin oder Dichlorethan) zur Vernetzung eingesetzt wird.

Gegenstand der Erfindung ist daher ein Verfahren zur Vernetzung von Substanzen, die primäre, sekundäre oder tertiäre Aminogruppen enthalten, die in einem im wesentlichen aus Wasser bestehenden Lösungungsmittel vernetzt werden, dadurch gekennzeichnet, dass als Vernetzungsmittel im wesentlichen wässrige Lösungen von C₁-C₄-Alkanderivaten aus der Gruppe Dichloralkane, Dibromalkane, Monobrommonochloralkane, aromatische Dichloride, Epihalogenhydrine, Glyoxal-bis-acrylamid, Dihalogenether, Halogenhydrine, Bisepoxyverbindungen, ω-Halogencarbonsäurehalogenide, Divinylverbindungen, 4-Chlormethyl-1,3-dioxolanon-(2),2-Chlorethylchlorameisensäureester, Chlorameinsensäureester, 3-Chlor-2-hydroxy-propylether, Glycidether oder Bischlorhydrine von Polyalkylenoxiden und 1,3,5-Trianyloylhexahydro-s-triazin mit Konzentrationen von ≤ 6 Gew.-%, bevorzugt ≤ 3 Gew.-%, eingesetzt werden, wobei die C₁-C₄-Alkanderivate sich in Wasser bei 20°C maximal zu 6 Gew.-% lösen.

Im allgemeinen führt man die erfindungsgemäße Vernetzung so durch, dass man zur zu vernetzenden Substanz oder zu seiner im wesentlichen wässrigen Lösung eine wässrige Lösung des Vemetzers zugibt. Die Zugabe erfolgt bei 40 bis 200°C, insbesondere bei 70 - 140°C. Die Reaktion kann ggf. unter Druck oder unter Inertgas durchgeführt werden. Als Lösungsmittel für den Vernetzer und/oder die zu vernetzende Substanz eignen sich Wasser sowie Alkohole, Ester und Ether sowie deren Mischungen, insbesondere eignet sich Wasser. Als Vernetzer eignen sich Dichloralkane, Dibromalkane, Monobrommonochloralkane, aromatische Dichloride, Epihalogenhydrine, Glyoxal-bisacrylamid, Dihalogenether, Halogenhydrine, Bisepoxyverbindungen, ω-Halogencarbonsäurehalogenide, Divinylverbindungen, 4-Chlormethyl-1,3-dioxolanon-(2),2-Chlorethylchlorameisensäureester, Chlorameinsensäureester, 3-Chlor-2-hydroxy-propylether, Glycidether oder Bischlorhydrine von Polyalkylenoxiden und 1,3,5-Trianyloylhexahydro-s-triazin.

Bevorzugt eignen sich Epihalogenhydrine und Dichloralkane, besonders bevorzugt Epichlorhydrin. Geeignet als Vernetzerlösung sind Konzentrationen von Vernetzer im Lösungsmittel von ≤ 6 Gew.-%, besonders geeignet sind Konzentrationen von ≤ 3 Gew.-%. Die Angaben über Gewichtsprozent beziehen sich auf die Löslichkeit bei 20°C.

Die durch die Zugabe an Vernetzerlösung bedingten Mehrzugaben an Wasser finden bei der Berechnung des Ansatzes insofern Berücksichtigung, als die vorgelegte Wassermenge entsprechend reduziert werden kann. Zur Erreichung gleicher Viskositäten wird bei Einsatz einer hochverdünnten, wässrigen Vernetzerlösung wesentlich weniger Vernetzer benötigt. Die Zeit, die nach einer Vernetzungsmittel-Zugabe bis zum Erreichen der Viskositätskonstanz verstreicht (Nachreaktionszeit), sinkt ebenfalls und ermöglicht so eine deutlich schnellere Fahrweise. Die erhaltenen Produkte sind lagerstabil und zeigen selbst bei Lagerung unter erhöhter Temperatur keinerlei Viskositätsanstieg mehr. Der in vielen Fällen dagegen beobachtete leichte Viskositätsabfall ist in der Praxis unrelevant, da er die Fließfähigkeit des Produktes nicht behindert.

### Beispiele

### Beispiel 1

### Herstellung eines Polyaminoamids durch Polykondensation

In ein 3-1-Reaktionsgefäß mit Planschliffdeckel, ausgestattet mit Kühler, Stickstoffzufuhr, Destillationsbrücke ohne Kühlung und Thermometer, werden 386,7 g Adipinsäure, 59,9 g Caprolactam, 27,6 g destilliertes Wasser und 295,2 g Diethylentriamin gegeben. Der Ansatz wird auf eine Innentemperatur von 175°C aufgeheizt. Nach Abdestillieren des Reaktionswassers erhält man eine wasser-klare, gelbe Schmelze, die nach vorsichtigem Verdünnen mit 969,75 g destilliertem Wasser eine Dichte von 1,044 g/cm², einen pH von 11,1 und einen Festkörpergehalt von 40 % aufweist.

### Beispiel 2

### Vernetzung des Polyaminoamids nach Beispiel 1 in wassriger Lösung mit 98%igem Epichlorhydrin (Vergleichsbeispiel)

In einer 1-1-Planschliffapparatur mit Kühler, Stickstoffzufuhr, Thermometer, Rührer und Dosierkapillare werden 618,1 g eines Polykondensates nach Beispiel 1 mit einem Feststoffanteil von 39,8 % und 381,9 g Wasser auf 80°C aufgeheizt Durch die Dosierkapillare werden insgesamt 13,74 g 98%iges Epichlorhydrin in Intervallen zudosiert. Ein erneutes Zugabeintervall kann erst begonnen werden, wenn das Epichlorhydrin aus der letzten Zugabe abreagiert hat (Nachreaktionszeit), was in diesem Fall ca. 34 min dauert. Man erhält eine gelbliche, klare Lösung, die mit 27,89 g 85%iger Ameisensäure auf einen pH von 7,5 eingestellt wird. Das Produkt hat einen FK von 25,5 % und eine Viskosität von 504 mPa·s entsprechend 100 s Durchlaufzeit im 4-mm-DIN-Durchlaufbecher.

### Beispiel 3

### Vernetzung des Polyaminoamids nach Beispiel 1 in wassriger Lösung mit einer 2,76 vol.-%igen Lösung von Epichlorhydrin in Wasser (erfindungsgemäß)

Die Vernetzung mit Epichlorhydrin wird wie in Beispiel 2 geführt, Epichlorhydrin wird jedoch als 2,76 vol.-%ige wässrige Lösung durch einen Tropftrichter in Intervallen zudosiert. Es werden 383,0 g Vernetzerlösung zudosiert, entsprechend 12,49 g reinem Epichlorhydrin. Die Nachreaktionszeit dauert 18 min. Der Epichlorhydrinverbrauch liegt bei 95 % des Verbrauches in Beispiel 2. Die Lösung wird mit 28,52 g 85 %iger Ameisensäure auf pH 7,5 eingestellt und hat einen Festkörpergehalt von 25,8 % und eine Viskosität von 509 mPa·s entsprechend 99 s im 4-mm-DIN-Durchlaufbecher.

### Beispiel 4

### Gemeinsame Vernetzung zweier wasserlöslicher Polymere mit 98%igem Epichlorhydrin (Vergleichsbeispiel)

In eine 3-l-Planschliffapparatur mit Thermometer, Intensivkühler, Rührer, Stickstoffanschluss und Dosierkapillare werden 1173,27 g eines Polykondensates nach Beispiel 1 mit einem Festkörpergehalt von 39,8 % sowie 525,70 g eines Polyaduktes von Polyethylenglykol-Diglycidylether und Diethylentriamin mit einem Festkörpergehalt von 74,9 % analog EP-PS 0 000 714 und 1801 g Wasser vorgelegt. Unter Rühren und Stickstoffzufuhr wird das Gemisch auf 80°C Innentemperatur erwärmt. Anschließend werden mittels einer Dosierpumpe 17,30 g Epichlorhydrin in mehreren Zugabeintervallen zugegeben. Man erhält eine klare, gelbliche Lösung, die mit 53,36 g 85%iger Ameisensäure auf pH 7 eingestellt wird und einen Festkörpergehalt von 24,7 % aufweist. Die Viskosität, gemessen im 4-mm-DIN-Durchlaufbecher, beträgt bei 20°C 122 s (677 mPa·s).

### Beispiel 5

### Gemeinsame Vernetzung zweier wasserlöslicher Polymere mit einer 1 vol.-%igen Lösung von Epichlorhydrin in Wasser (erfindungsgemäß)

Die Reaktion wird wie in Beispiel 4 geführt, es werden jedoch lediglich 698,52 g Wasser vorgelegt. Es werden 1116,31 g einer 1,15 gew.-%igen (= 1 vol.-%igen) wässrigen Epichlorhydrin-Lösung in mehreren Intervallen zudosiert. Man erhält nach Einstellen des Produktes auf pH 7,5 mit 58,24 g 85%ige Ameisensäure eine gelbliche, klare Lösung, die einen Feststoffgehalt von 24,6 % und eine Durchlaufzahl im 4-nun-DIN-Becher von 116 s (629 mPa·s) besitzt.

| Vergleich der Produkte aus Beispiel 4 und 5 | Beispiel 4 | Beispiel 5 |
|---|---|---|
| Nachreaktionszeit | 90 min | 20 min |
| Epichlorhydrinverbrauch | 100 % | 74 % |

### Beispiel 6 und 7

### Vernetzung analog Beispiel 5 mit einer 3- bzw. 5 vol.-%igen wässrigen Epichlorhydrinlösung (erfindungsgemäß)

Die Durchführung erfolgt analog Beispiel 5. Die geänderten Ansatzgrößen sind der folgenden Tabelle zu entnehmen.

Man vergleiche den Epichlorhydrinverbrauch mit den Werten aus Beispiel 4 und 5.

| | | |
|---|---|---|
| Epichlorhydringehalt (Vol.% in der Vernetzerlösung) | 3 % | 5 % |
| Gewicht der zudosierten Vernetzerlösung | 419,23 g | 269,11 g |
| Reinverbrauch Epichlorhydrin | 14,46 g | 15,42 g |
| Verbrauch an Epichlorhydrin (für 98 %iges Epichlorhydrin = 100 % gesetzt) | 93,6 % | 89 % |
| Benötigte Menge 85 %ige Ameisensäure zum Einstellen der Lösung auf pH 7,5 | 54,59 g | 53,6 g |
| Durchlaufzeit im 4-mm-DIN-Becher | 103 s | 138 s |
| Viskosität | 528 mPa· | 713 mPa^{·}s |

### Beispiel 8

### Vernetzung in einem 20-t-Reaktor mit 98 %igem Epichlorhydrin (Vergleichsbeispiel)

Die Vernetzung wird in einer Ansatzgröße von 18.242 kg in einem 20-t-Stahlautoklav mit Ekatorührwerk, Strömungsbrecher und Umpumpeinrichtung analog Beispiel 4 mit 98%igem Epichlorhydrin durchgeführt. Innerhalb der ersten Stunde wurde Epichlorhydrin kontinuierlich mit einer Förderleistung von 20 kg/h in die Lösung gepumpt, ab dann bis zum Erreichen einer Durchlaufzeit von 35 - 40 s mit 10kg/h. Danach wird das Epichlorhydrin intervallweise zugegeben. Der Gesamtverbrauch an Epichlorhydrin beträgt 80,9 kg. Die Gesamtdauer der Vernetzung betrug 16 h.

### Beispiel 9 - 11

### Vernetzung in einem 20-t-Reaktor mit einer wässrigen Lösung von Epichlorhydrin (erfindungsgemäß)

Die Vernetzung wird in einer Ansatzgröße von 18.242 kg in einem 20-t-Stahlautoklav mit Ekatorührwerk analog Beispiel 8 durchgeführt, jedoch mit verschieden stark verdünnten Epichlorhydrinlösungen. Entsprechend der als Vernetzerlösung eindosierten Wassermenge wird weniger Wasser vorgelegt. Bei Verwendung einer 1 vol.-%igen Epichlorhydrinlösung in Wasser dauert die Vernetzung 7,6 h. Die Resultate zeigt folgende Tabelle (die erreichten Viskositäten betrugen zwischen 90 und 120 s Durchlaufzeit im 4-mm-DIN-Becher).

| Legende | Beispiele | | | |
|---|---|---|---|---|
| | Nr. 8 (Vergleich) | Nr. 9 | Nr. 10 | Nr. 11 |
| | | (erfindungsgemäß) | | |
| Epichlorhydringehalt in der Vernetzerlösung | reines Epichlorhydrin (98 %ig) | 1 Vol.-% | 0,57 Vol.-% | 0,32 Vol.-% |
| Verbrauch an Epichlorhydrin (98 %iges Epichlorhydrin = 100 % gesetzt) | 100 % | 59 % | 50 % | 43 % |
| Nachreaktionszeit | 60 min | 15 min | nicht bestimmt | nicht bestimmt |

### Test auf Lagerstabilität

Angegeben ist die Viskositätsänderung durch Tempern bei 80°C, gemessen im 4-mm-DIN-Durchlaufbecher. Die Durchlaufzeit bei einer Temperdauer von 0 h wurde = 100 % gesetzt.

### 1. Vernetzung analog Beispiel 4 bis 7 (3-1-Reaktor)

| Epichlorhydringehalt in der Vernetzerlösung | reines Epichlorhydrin (98 %/ Vergleichsbeispiel) | wässrige Epichlorhydrinlösung | | |
|---|---|---|---|---|
| | | (erfindungsgemäß) | | |
| | | 5 Vol.-% | 3 Vol.-% | 1 Vol.-% |
| Temperdauer: 0 h | 100 % | 100 % | 100 % | 100 % |
| Temperdauer: 4h | 127 % | 107 % | 100 % | 99 % |
| Temperdauer: 16h | 132% | 111 % | 90% | 88% |

### 2. Vernetzung analog Beispiel 8 bis 11 (20-t-Reaktor)

| | Nr. 8 | Nr. 9 | Nr. 10 | Nr. 11 |
|---|---|---|---|---|
| | | (erfindungsgemäß) | | |
| Epichlorhydringehalt in der Vernetzerlösung | reines EP (98 %/Vergleichsbeispiel) | 1 Vol.-% | 0,57 Vol.-% | 0,32 Vol.-% |
| Temperdauer: 0 h | 100 % | 100 % | 100 % | 100 % |
| Temperdauer: 4 h | nicht bestimmt | 98 % | nicht bestimmt | nicht bestimmt |
| Temperdauer: 16 h | 148 % | 70 % | 89 % | 95 % |

## Patentansprüche

1. Verfahren zur Vernetzung von Substanzen, die primäre, sekundäre oder tertiäre Aminogruppen enthalten, die in einem im wesentlichen aus Wasser bestehenden Lösungsmittel vemetzt werden, **dadurch gekennzeichnet, dass** als Vernetzungsmittel im wesentlichen wässrige Lösungen von C₁-C₄-Alkanderivaten aus der Gruppe Dichloralkane, Dibromalkane, Monobrommonochloralkane, aromatische Dichloride, Epihalogenhydrine, Glyoxal-bis-acrylamid, Dihalogenether, Halogenhydrine, Bisepoxyverbindungen, ω-Halogencarbonsäurehalogenide, Divinylverbindungen, 4-Chlormethyl-1,3-dioxolanon-(2),2-Chlorethylchlorameisensäureester, Chlorameinsensäureester, 3-Chlor-2-hydroxy-propylether, Glycidether oder Bischlorhydrine von Polyalkylenoxiden und 1,3,5-Trianyloylhexahydro-s-triazin mit Konzentrationen von ≤ 6 Gew.-%, eingesetzt werden, wobei die C₁-C₄-Alkanderivate sich in Wasser bei 20°C maximal zu 6 Gew.-% lösen.

2. Verfahren nach Anspruch 1, **dadurch gekennzeichnet, dass** das Vernetzungsmittel eine Konzentration ≤ 3 Gew.-% aufweist.

3. Verfahren nach Anspruch 1, **dadurch gekennzeichnet, dass** als Vernetzungsreagenz in der Vemetzerlösung Dihalogenalkane oder Epihalogenhydrine eingesetzt werden.

4. Verfahren nach Anspruch 1, **dadurch gekennzeichnet, dass** in der Vernetzerlösung Dichlorethan oder Epichlorhydrin eingesetzt wird.

5. Verfahren nach Anspruch 1, **dadurch gekennzeichnet, dass** in der Vernetzerlösung Epichlorhydrin eingesetzt wird.

6. Verfahren nach Anspruch 1, **dadurch gekennzeichnet, dass** als zu vernetzende Substanzen nieder- und hochmolekulare Amine, Ammoniak, Polyalkylenpolyamine, Polyaminoamide, Polyallylamin, Polyethylenimin, Polyvinylamin, Polymerisate, wie N-substituierte Polyacrylamide, Vinylimidazol- Homo- und -Copolymere sowie deren Mischungen, Copolymere mit anderen Monomerbausteinen sowie deren Mischungen, Block- oder Pfropfcopolymere der genannten Substanzen sowie deren Mischungen eingesetzt werden.

## Claims

1. A method of crosslinking substances which contain primary, secondary or tertiary amino groups, which are crosslinked in a solvent which consists substantially of water, **characterised in that** crosslinking agents are used which are substantially aqueous solutions of C₁-C₄ alkane derivatives from the group consisting of dichloroalkanes, dibromoalkanes, monobromomonochloroalkanes, aromatic dichlorides, epihalogenohydrins, glyoxal-bis-acrylamide, dihalogenoethers, halogenohydrins, bis-epoxy compounds, ω-halogenocarboxylic acid halides, divinyl compounds, 4-chloromethyl-1,3-dioxolanone-(2),2-chloroethyl chloroformic acid esters, chloroformic acid esters, 3-chloro-2-hydroxypropyl ethers, glycidyl ethers or bischlorohydrins of polyalkylene oxides and 1,3,5-trianyloylhexahydro-s-triazine with concentrations of ≤ 6 % by weight, wherein the C₁-C₄ alkane derivatives have a maximum solubility in water of 6 % by weight at 20°C.

2. A method according to claim 1, **characterised in that** the crosslinking agent has a concentration ≤ 3 % by weight.

3. A method according to claim 1, **characterised in that** dihalogenoalkanes or epihalogenohydrins are used as crosslinking reagents in the crosslinking solution.

4. A method according to claim 1, **characterised in that** dichloroethane or epichlorohydrin is used in the crosslinking solution.

5. A method according to claim 1, **characterised in that** epichlorohydrin is used in the crosslinking solution.

6. A method according to claim 1, **characterised in that** low- and high molecular weight amines, ammonia, polyalkylene polyamines, polyaminoamides, polyallylamine, polyethylenimine, polyvinylamine, polymers such as N-substituted polyacrylamides, vinylimidazole homo- and copolymers and mixtures thereof, copolymers with other monomer components and mixtures thereof, block or graft copolymers of the aforementioned substances and mixtures thereof are used as the substances to be crosslinked.

## Revendications

1. Procédé de réticulation de substances qui contiennent des groupes amino primaires, secondaires ou tertiaires, qui sont réticulées dans un solvant consistant essentiellement en eau, **caractérisé en ce que** l'on utilise comme agent de réticulation des solutions sensiblement aqueuses de dérivés d'alcanes en C₁-C₄ du groupe des dichloroalcanes, des dibromoalcanes, des monobromo- monochloroalcanes, des dichlorures aromatiques, des épihalogénohydrines, du glyoxal-bis-acrylamide, des dihalogénoéthers, des halogénohydrines, des composés bisépoxydés, des halogénures d'acides ω-halogénocarboxyliques, des composés divinyliques, des 4-chlorométhyl-1,3-dioxolanone-(2),2-chloroéthylchloroformiates, des chloroformiates, du 3-chloro-2-hydroxypropyléther, des glycidéthers ou des bischlorhydrines de poly(oxydes d'alkylène) et de 1,3,5-trianyloylhexahydro-s-triazine avec des concentrations inférieures ou égales à 6 % en masse, les dérivés d'alcanes en C₁-C₄ se dissolvant dans l'eau à 20°C à raison de 6 % en masse au maximum.

2. Procédé selon la revendication 1, **caractérisé en ce que** l'agent de réticulation présente une concentration inférieure ou égale à 3 % en masse.

3. Procédé selon la revendication 1, **caractérisé en ce que** des dihalogénoalcanes ou des épihalogénohydrines sont utilisés comme agent de réticulation dans la solution d'agent de réticulation.

4. Procédé selon la revendication 1, **caractérisé en ce que** du dichloroéthane ou de l'épichlorhydrine est utilisé dans la solution d'agent de réticulation.

5. Procédé selon la revendication 1, **caractérisé en ce que** de l'épichlorhydrine est utilisée dans la solution d'agent de réticulation.

6. Procédé selon la revendication 1, **caractérisé en ce que** l'on utilise comme substances à réticuler des amines de basse masse moléculaire ou de haute masse moléculaire, l'ammoniac, des polyalkylènepolyamines, des polyaminoamides, la polyallylamine, la polyéthylèneimine, la polyvinylamine, des produits de polymérisation comme des polyacrylamides N-substitués, des homo- et copolymères du vinylimidazole ainsi que leurs mélanges, des copolymères avec d'autres éléments monomères ainsi que leurs mélanges, des copolymères séquencés ou greffés des substances citées ainsi que leurs mélanges.
